# EUROPÄISCHE PATENTSCHRIFT

(11) **EP 3 611 214 B1**
(45) Veröffentlichungstag und Bekanntmachung des Hinweises auf die Patenterteilung: **04.11.2026**
(21) Anmeldenummer: 18189072.4
(22) Anmeldetag: 15.08.2018
(51) Int. Cl.: C08G 77/14

(54) **SIOC-VERKNÜPFTE, LINEARE POLYDIMETHYLSILOXAN-POLYOXYALKYLEN-BLOCKCOPOLYMERE**
SIOC-LINKED, LINEAR POLYDIMETHYLSILOXANE POLYOXYALKYLENE BLOCK COPOLYMERS
COPOLYMÈRES BLOC POLYDIMÉTHYLSILOXANE-POLYOXYALKYLÈNE LINÉAIRES À LIAISONS SIOC

(43) Veröffentlichungstag der Anmeldung: 19.02.2020
(73) Patentinhaber: Evonik Operations GmbH, 45128 Essen (DE)
(72) Erfinder: KNOTT, Wilfried, 45355 Essen (DE); DUDZIK, Horst, 45326 Essen (DE); WINDBIEL, Dagmar, 45289 Essen (DE)
(74) Vertreter: Evonik Patent Association

(56) Entgegenhaltungen:
- EP-A2- 1 935 923
- WO-A2-2014/104388
- WO-A2-2014/104390
- DE-A1- 102005 039 931
- DE-B2- 1 545 110

## Beschreibung

Die Erfindung betrifft ein Verfahren zur Herstellung von SiOC-verknüpften, linearen Polydimethylsiloxan-Polyoxyalkylen-Blockcopolymeren mit sich wiederholenden (AB)-Einheiten.

Bei der Herstellung von Polyurethanweichschäumen werden dem Gemisch der Rohstoffe Polysiloxan-Polyoxyalkylen-Blockmischpolymerisate zugesetzt, welche vielfältige Aufgaben haben und u.a. die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:
Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die in Bezug auf die Polyurethanbildung reaktiv (z.B. OH-Gruppe) oder inert (z.B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein.

Der Polysiloxanblock kann in Bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten ist das Auffinden im Sinne der Polyurethanherstellung besonders wirksamer spezieller Strukturparameter und entsprechender Blockmischpolymerisate eine sehr große Herausforderung.

Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:
In der DE 10 2005 039 931.2 wird ein Verfahren zur Herstellung von SiOC-verknüpften, linearen Polydimethylsiloxan-Polyoxyalkylen-Blockcopolymeren mit sich wiederholenden (AB)-Einheiten beschrieben. Gemäß diesem Verfahren werden einer aus Aminosiloxan, Polyoxyalkylendiol und Solvens bestehenden Reaktionsmatrix bei erhöhten Temperaturen eine geringe Menge eines tertiären Amins wie z.B. aus der Reihe der aromatischen Amine (Pyridine, Pyrimidine, Pyridazin, Pyrazin, Chinolin, Imidazol, etc.) und/oder auch aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en hinzugesetzt und die Polykondensationsreaktion unter Freisetzung von Ammoniak bis zum angestrebten Molekulargewichtsaufbau gemäß der allgemeinen Reaktion
≡SiNH₂ + HOC= → =SiOC= + NH₃ durchgeführt.

Diese Verbindungen, ihre Verwendung zur Herstellung von Polyurethanschäumen sowie ein Verfahren zu ihrer Herstellung wird bereits in der US 3,836,560 beschrieben.

Diese Polyethersiloxane sind wertvolle grenzflächenaktive Additive zur Herstellung von PolyurethanSchaumstoffen, wobei insbesondere ihre zellöffnende Wirkung in Etherschäumen oder offenzelligen Hartschäumen gefragt ist. Nachteilig erweist sich deren industrielle Synthese dadurch, dass sowohl die mit Salzanfall befrachtete Herstellung der Aminkomponente (hydrolyseanfällige Sllazanvorstufe) als auch das Kopplungsverfahren selbst aufwändig sind und z.T. mit problematischen, in der betrieblichen Praxis nicht einfach zu handhabbaren Verbindungen gearbeitet werden muss.

Erstrebenswert ist es, ein einfaches, ökonomisch sinnvolles Verfahren zu entwickeln, mit dem (AB)-Blockcopolymere mit verbesserten Eigenschaften herstellbar sind.

In der DE 103 12 636.8 wird ein Verfahren zur Umsetzung von =Si(H)-Einheiten enthaltenden verzweigten Polyorganosiloxanen mit wenigstens einem Alkohol beansprucht, welches dadurch gekennzeichnet ist, dass man in einem Verfahrensschritt unter Einsatz einer oder mehrerer Elementverbindungen der III. Haupt-und/oder der 3. Nebengruppe als Katalysator in den =Si(H)-Einheiten des Polyorganosiloxans vorhandene Wasserstoffatome teilweise oder vollständig durch Alkoholatreste der eingesetzten Alkohole ersetzt.

Der Lehre dieser Literaturstelle folgend, lassen sich auch teilsubstituierte Polyorganosiloxane herstellen, die neben den substituierten Si-O-C-Einheiten noch nicht umgesetzte =Si(H)-Einheiten aufweisen. Dazu wird das Stoffmengen-Verhältnis von SiH-Gruppen zu Alkoholgruppen vorzugsweise im Bereich von 1:0,1 bis zu 1:0,99 Moläquivalenten eingestellt.

Durch eine derartige Umsetzung in einem unterstöchiometrischen Verhältnis soll ein Rest an nicht umgesetzter Si-H-Funktion erhalten bleiben, der in einem darauffolgenden Schritt, beispielsweise in einer Hydrosilylierungsreaktion, bei der eine Silicium-Kohlenstoff-Bindung gebildet wird, umgesetzt werden kann, um gemischte Produkte herzustellen.

Die EP1935922 B1 lehrt einen Zugang zu hochmolekularen linearen SiOC-verknüpften Polydimethylsiloxan-Polyoxyalkylen-Blockcopolymeren mit sich wiederholenden (AB)-Einheiten durch die Umsetzung von Polyetherdiolen mit einem stöchiometrischen Überschuss α,ω-Dihydrogen-polydimethylsiloxanen in Gegenwart einer oder mehrerer Elementverbindungen der III. Haupt- und/oder der 3. Nebengruppe als Katalysator, wobei man die Reaktion nach vollständig erfolgter Umsetzung der Alkoholkomponente so lange weiterführt, bis keine =Si(H)-Gruppen gasvolumetrisch mehr nachweisbar sind. Die gasvolumetrische SiH-Wert-Bestimmung erfolgt durch die alkoholatinduzierte Zersetzung einer Probe nach etablierten Verfahren.

So attraktiv dieses dehydrogenative Verfahren zur SiOC-Verknüpfung gerade in Bezug auf die Vermeidung flüssiger und/ oder fester Nebenprodukte auch ist, so stellen sowohl der Einsatz kostspieliger und toxischer Katalysatoren, wie zum Beispiel Tris(pentafluorophenyl)-boran, als auch die sichere Handhabung und Entsorgung des bei der Synthese entstehenden Wasserstoffgases Nachteile dieser Technologie dar, die der Überwindung harren.

Somit besteht die zu lösende technische Aufgabe darin, ein Verfahren zur Herstellung linearer SiOC-verknüpfter Polydimethylsiloxan-Polyoxyalkylen-Blockcopolymerer und hierbei ganz besonders auch derjenigen vom hochmolekularen Typ zu finden, das die diskutierten Schwierigkeiten überwindet.

Überraschenderweise wurde nun gefunden, dass man lineare SiOC-verknüpfte Polydimethylsiloxan-Polyoxyalkylen-Blockcopolymere mit sich wiederholenden (AB)-Einheiten und hierbei ganz besonders auch derjenigen vom hochmolekularen Typ herstellen kann, indem man endäquilibrierte lineare, trifluormethansulfonsaure α,ω-Acetoxy-gruppen tragende Polydimethylsiloxane mit Polyetherdiolen zur Umsetzung bringt.

Zugänge zu Acetoxy-funktionellen Siloxanen sind in der Literatur beschrieben.

So ist aus etlichen Publikationen und Schutzrechtsersuchen die nicht äquilibrierende Öffnung einfacher unverzweigter Siloxanzyklen mit Acetanhydrid zu kurzkettigen, kettenterminale Acetoxygruppen tragenden Siloxanen in Gegenwart von Katalysatoren bekannt.

Borisov und Sviridova beschreiben die Öffnung zyklischer Dimethylsiloxane mit Acetanhydrid in Gegenwart katalytischer Mengen Eisen(III)chlorid zu kurzkettigen α,ω-Acetoxysiloxanen (S. N. Borisov, N. G.Sviridova, J. Organomet. Chem. 11 (1968), 27-33). Lewis et al. widmet sich in der US 4.066.680 der Herstellung kurzkettiger α,ω-Siloxandiole, wobei er Octamethylcyclotetrasiloxan mit Acetanhydrid an säurebehandelten Bleicherden umsetzt und die so erhaltenen Mischungen kurzkettiger α,ω-Acetoxysiloxane in alkalisch eingestelltem Wasser hydrolysiert.

Aus US 3346610 ist gleichfalls ist ein Zugang zu Acetoxygruppen tragenden, kurzkettigen Siloxanen bekannt, der auf der Metallhalogenid induzierten Acetoxy-Modifizierung gespannter cyclischer Siloxane beruht, indem man diese mit Acetoxygruppen enthaltenden Silikonverbindungen zur Umsetzung bringt. Eine Vielzahl Friedel-Crafts-aktiver Metallhalogenide fungiert hier als Katalysator, wobei Zinkchlorid als bevorzugt ausgelobt wird. Eine spezielle Zielsetzung der US 3.346.610 liegt in der Acetoxy-Modifizierung gespannter Diorganosiloxancyclen unter bewusster Vermeidung von Äquilibriervorgängen.

Der Stand der Technik bezieht sich somit auf Arbeiten, die die Öffnung cyclischer Siloxane - hierbei manchmal gespannter Cyclosiloxane - mit Acyloxygruppen enthaltenden Reaktanden vorsehen und deren Zielsetzung es ist, definierte lineare kurzkettige und das auf dem Wege der fraktionierten Destillation noch zu separierende Siloxanspezies zu gewinnen.

Jedoch sind die auf diesem Wege synthetisierten, Molmassen-definierten, kettenreinen Acetoxymodifizierten Siloxanverbindungen nicht geeignet für die Herstellung von organomodifizierten Siloxanen insbesondere Polyethersiloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Oligomerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind.

Ebenfalls sind Acyloxy-organopolysiloxane und hierbei insbesondere Organosiloxane mit endständigen Acyloxygruppen als Ausgangsmaterialien für Folgereaktionen bekannt. So können beispielsweise die Acyloxygruppen in einem Diorganosiloxan hydrolysiert werden, worauf das Hydrolysat dehydratisiert und das dehydratisierte Hydrolysat unter Bildung von fließfähigem Diorganopolysiloxan polymerisiert werden kann. Diese fließfähigen Polysiloxane eignen sich als Ausgangsmaterialien für die Herstellung viskoser Öle und Kautschuke, die zu Silikonelastomeren gehärtet werden können.

Mit endständigen Acyloxygruppen versehene Organosiloxane können beispielsweise durch Umsetzung eines Alkylsiloxans und einer organischen Säure und/oder deren Anhydrid in Gegenwart von Schwefelsäure als Katalysator erhalten werden. Ein solches Verfahren ist in der US-Patentschrift 2 910 496 (Bailey et al.) beschrieben. Obwohl man nach diesem Verfahren prinzipiell auch Organosiloxane mit endständigen Acyloxygruppen erhält, so haftet dem Prozess der Nachteil an, dass das Reaktionsprodukt aus einer Mischung von acyloxyhaltigen Siloxanen und Acyloxygruppen tragenden Silanen unterschiedlicher Zusammensetzung besteht. Insbesondere führt die Lehre hierzu aus, dass aus M-, D- und T-Einheiten zusammengesetzte Alkylsiloxancopolymere durch das Verfahren in Trimethyl-acyloxysilan, Di-Acyloxydimethylsiloxan und Methyltriacyloxysilan gespalten werden. Somit erhält Bailey bei der Umsetzung von Octamethylcyclotetrasiloxan mit Essigsäureanhydrid und Essigsäure nach Neutralisation der als Katalysator eingesetzten Schwefelsäure, Abtrennen der Salze und Abziehen von Wasser, restlicher Essigsäure und Acetanhydrids ein komplexes Stoffgemisch und keinesfalls ein Äquilibrat, das er dann der fraktionierten Destillation unterwirft (siehe Beispiel, ibid.). Die stoffliche Identität der dabei erhaltenen Fraktionen II und IV bleibt unklar, so dass es hiernach schwierig ist, definierte Produkte zu erhalten, beziehungsweise diese in hohen Ausbeuten vom Gemisch abzutrennen.

Sich auf Bailey et al. (US 2 910 496) beziehend, lehrt die DE-OS 1545110 (A1) (Omietanski et al.) ein Verfahren, bei dem eine Acyloxygruppe eines Acyloxysiloxans mit der Hydroxylgruppe eines Polyoxyalkylenhydroxypolymers unter Bildung eines Siloxan-oxyalkylen-Blockmischpolymers und einer Carbonsäure umgesetzt wird, wobei die Carbonsäure aus dem Reaktionsgemisch entfernt wird. Die dort beschriebenen, lösemittel- und katalysatorfrei geführten Umsetzungen verlangen zum Teil beträchtliche Reaktionszeiten (bis zu 11,5 Stunden (Beispiel 1), sehr hohe, produktbelastende Umsetzungstemperaturen (150 bis 160°C (Beispiel 1) und das Anlegen eines Hilfsvakuums beziehungsweise das Strippen der Reaktionsmatrix mit trockenem Stickstoff über die gesamte Reaktionsdauer und erreichen trotz der harschen Umsetzungsbedingungen auf Produktstufe nicht immer vollständigen Umsatz (Beispiel 9, ibid.).

Aus produktionstechnischer Sicht gereichen insbesondere die Kombination aus hohen Umsetzungstemperaturen und langen Reaktionszeiten sowie die nicht vorhersehbare Produktqualität dem von Omietanski et al. beschriebenen Prozess zum Nachteil.

Nun wurde gefunden, dass man trifluormethansulfonsaure äquilibrierte α,ω-Diacetoxysiloxane durch die Umsetzung von Siloxancyclen (D₄ und/oder D₅) mit Acetanhydrid in Gegenwart von Trifluormethansulfonsäure herstellen kann, wie die Lehre der noch nicht offengelegten europäischen Anmeldungen mit den Aktenzeichen EP18172882.5 und EP18172876.7 offenbart. Der Lehre dieser Schriften folgend, reagieren diese Diacetoxysiloxane mit Polyether(mono)ole bei mäßigen Temperaturen zügig und zudem vollständig zu SiOC-verknüpften Polyethersiloxanen des Strukturtyps ABA.

Die Erfinder haben nun überraschenderweise gefunden, dass trifluormethansulfonsaure, äquilibrierte α,ω-Diacetoxysiloxane, und zwar insbesondere solche wie in EP18172882.5 und EP18172876.7 beschrieben, sogar eine derartig hohe Reaktivität besitzen, dass man bei deren Umsetzung mit α,ω- Polyetherdiolen zu den anspruchsvollen, hochmolekularen SiOC-verknüpften A(BA)ₙ-Strukturen gelangt.

Demzufolge sind die Offenbarungsgehalte der EP18172882.5 und EP18172876.7 vollumfänglich Teil der hier vertretenen erfinderischen Lehre. Trifluormethansulfonsaure äquilibrierte α,ω-Diacetoxypolydimethylsiloxane sind dadurch erhältlich, dass man zyklische Siloxane, insbesondere umfassend D₄ und/ oder D₅, unter Einsatz von Trifluormethansulfonsäure als Katalysator mit Acetanhydrid umsetzt. Die Trifluormethansulfonsäure wird dabei vorzugsweise in Mengen von 0,1 bis 0,3 Massenprozent, bezogen auf die aus Acetanhydrid und zyklischen Siloxanen bestehende Reaktionsmatrix, eingesetzt. Die Umsetzung wird vorzugsweise im Temperaturbereich von 140 bis 160°C und vorzugsweise in einem Zeitraum von 4 bis 8 Stunden durchgeführt.

Erfindungsgemäß werden die trifluormethansulfonsauren, endäquilibrierten α,ω-Diacetoxy-polydimethylsiloxan mit Polyetherdiol-(en) durch Hinzufügen einer festen, flüssigen oder gasförmigen Base zur Umsetzung gebracht gegebenenfalls unter Einsatz inerter Lösungsmittel.

Bevorzugte erfindungsgemäß einzusetzende einfache Basen sind zum Beispiel Alkali- bzw. Erdalkali-Carbonate und/ oder -Hydrogencarbonate und/ oder gasförmiger Ammoniak und/ oder Amine. Der bekannten Kondensationsneigung von Acetoxysiloxanen Rechnung tragend, sind dabei ganz besonders bevorzugt solche Basen, die auf Grund ihrer chemischen Zusammensetzung kein Wasser in das Reaktionssystem eintragen. Somit haben wasserfreie Carbonate vor Hydrogencarbonaten und Hydratwasser-freie vor Hydratwasser-enthaltenden Basen jeweils den Vorzug.

Die Schwerlöslichkeit der Alkali- bzw. Erdalkali-Carbonate und/ oder -Hydrogencarbonate im Reaktionssystem berücksichtigend, wählt man von diesen gemäß einer bevorzugten Ausführungsform der Erfindung höhere Überschüsse, die vorzugsweise mindestens dem 2000-fachen stöchiometrischen Äquivalent der im α,ω-Diacetoxypolydimethylsiloxan enthaltenen Trifluormethansulfonsäure entsprechen.

Erfindungsgemäß ganz besonders bevorzugt ist die Verwendung gasförmigen Ammoniaks als Base, so dass die bei der Reaktion freiwerdende Essigsäure als Ammoniumacetat gebunden wird.

Die Menge der in das Reaktionssystem eingetragenen festen, flüssigen oder gasförmigen Base wird gemäß einer bevorzugten Ausführungsform der Erfindung so bemessen, dass sie sowohl für die Neutralisation der im System vorhandenen Trifluormethansulfonsäure, als auch der Salzfällung der am Siloxan gebundenen Acetatgruppen sowie der Fällung des noch im Reaktionssystem vorhandenen Acetanhydrids sowie gegebenenfalls freier Essigsäure dient. Die Reaktion wird gemäß einer bevorzugten Ausführungsform der Erfindung bei Temperaturen zwischen 20 bis 120°C, vorzugsweise zwischen 20 und 70°C über die Dauer von 1 bis 10, vorzugsweise mindestens über die Dauer von 1 bis 3 Stunden durchgeführt.

In einer bevorzugten Ausgestaltung der Erfindung kann man das trifluormethansulfonsaure, endäquilibrierte α,ω-Diacetoxy-polydimethylsiloxan mit Polyetherdiol-(en) bei Temperaturen von < 25°C unter Rühren vorlegen und dann Ammoniak einleiten (Beispiel 2). Diese unter starkem Ammoniakeinsatz gefahrene Ausgestaltungsvariante bindet neben im Reaktionssystem vorhandener Trifluormethansulfonsäure, Acetanhydrid und gegebenenfalls freier Essigsäure die die bei der Reaktion freiwerdende Essigsäure als Ammoniumacetat. Die Reaktion wird vorzugsweise bei Temperaturen zwischen 20 und 70°C über die Dauer von vorzugsweise 1 bis 3 Stunden durchgeführt.

Von entscheidender Bedeutung für das Erreichen einer hochmolekularen SiOC-verknüpften A(BA)n-Polyethersiloxanstruktur erweist sich die Qualität des eingesetzten, trifluormethansulfonsauren α,ω-Diacetoxypolydimethylsiloxans. Wie die Erfinder im Rahmen einer breit angelegten Untersuchung überraschend festgestellt haben, ist die Gewährleistung eines perfekten Äquilibrierergebnisses im α,ω-Diacetoxypolydimethylsiloxan für den Aufbau hochmolekularer SiOC-verknüpfter A(BA)n-Polyethersiloxanstruktur erforderlich. Mit dem Begriff "endäquilibriert" ist daher gemeint, dass das Äquilibriergleichgewicht erreicht worden ist, das sich bei einer Temperatur von 23°C und einem Druck von 1013,25 hPa einstellt. Als Indikator für das Erreichen des zuvor genannten Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxy-polydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)). Erfindungsgemäß soll der darin enthaltene Gesamtcyclengehalt definiert als Summe der Gehaltsanteile der zyklischen Siloxane umfassend D₄, D₅ und D₆ bezogen auf die Siloxanmatrix bevorzugt kleiner 13 Gewichtsprozent, besonders bevorzugt kleiner 12 Gewichtsprozent an der aus α,ω-Diisopropoxypolydimethylsiloxanen bestehenden Siloxanmatrix aufweisen.

Äquilibrierte α,ω-Diacetoxypolydimethylsiloxane dieser Qualität, also endäquilibrierte α,ω-Diacetoxypolydimethylsiloxane, können sehr vorteilhaft, das heißt auch nach sehr kurzer Reaktionszeit, durch die Umsetzung von Siloxancyclen (insbesondere umfassend D₄ und/oder D₅) mit Acetanhydrid in Gegenwart von Trifluormethansulfonsäure und Essigsäure hergestellt werden. Essigsäure wird dabei vorzugsweise in Mengen von 0,4 bis 3,5 Gewichtsprozent, bevorzugt 0,5 bis 3 Gewichtsprozent, weiter bevorzugt 0,8 bis 1,8 Gewichtsprozent, besonders bevorzugt in Mengen von 1,0 bis 1,5 Gewichtsprozent bezogen auf die Reaktionsmatrix bestehend aus Acetanhydrid und zyklischen Siloxanen hinzugesetzt.

Die Bereitstellung von erfindungsgemäß einsetzbaren trifluormethansulfonsauren, endäquilibrierte α,ω-Diacetoxypolydimethylsiloxanen wird exemplarisch in Beispiel 1 der vorliegenden Erfindung beschrieben.

Die Erfinder haben festgestellt, dass unvollständig äquilibrierte α,ω-Diacetoxypolydimethylsiloxane zu nichtverwendungsfähigen Produktmischungen, insbesondere im Hinblick auf den darin erzielten Polymerisationsgrad führen.

Da der Polymerisationsgrad des linearen Polydimethylsiloxan-Polyoxyalkylen-Blockcopolymeren insbesondere für dessen tensidische Wirksamkeit in Polyurethan-Etherschäumen qualitätsdeterminierend ist, kommt der Reaktionsverfolgung eine wichtige Rolle zu. Erfindungsgemäß bewährt hat sich hierbei die Methode, über die Reaktionszeit hinweg Proben aus der Reaktionsmatrix zu ziehen, die man dann zum Beispiel mit Hilfe der ²⁹Si-NMR und/ oder ¹³C-NMR-Spektroskopie analysiert. Die Abnahme des Integrals der für die Präsenz von Acetoxydimethylsiloxygruppen -OSi(CH₃)₂OCOCH₃ charakteristischen Signallagen geht mit dem beabsichtigten Molmassenaufbau des A(BA)n strukturierten Copolymers einher und ist ein verlässlicher Indikator für den erzielten Reaktionsumsatz.

Für den Fachmann unvorhersehbar werden auf diese Weise Strukturen erhalten, die als Stabilisatoren bei der Herstellung von Polyurethanschäumen (PU-Schäume), insbesondere PU-Weichschäumen, sprunghaft bessere Eigenschaften aufweisen.

Ein Gegenstand der Erfindung ist daher ein Verfahren zur Herstellung von SiOC-verknüpften, linearen Polydimethylsiloxan-Polyoxyalkylen-Blockcopolymeren mit sich wiederholenden (AB)-Einheiten durch Umsetzung von Polyetherdiolen mit trifluormethansulfonsauren, endäquilibrierten α,ω-Diacetoxypolydimethylsiloxanen, wobei man die Umsetzung durch Hinzufügen einer festen, flüssigen oder gasförmigen Base vornimmt und das gegebenenfalls unter Einsatz inerter Lösungsmittel.

Gemäß einer bevorzugten Ausführungsform der Erfindung werden als inerte Lösungsmittel Alkane, Cycloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol oder Glyzerin, vorzugsweise Myristylmyristat, verwendet.

Ein weiterer Gegenstand der Erfindung sind SiOC-verknüpfte, lineare Polydimethylsiloxan-Polyoxyalkylen-Blockcopolymere hergestellt gemäß obigem Verfahren.

Ein weiterer Gegenstand der Erfindung ist die Verwendung der gemäß dem erfindungsgemäßen Verfahren hergestellten Verbindungen als grenzflächenaktive Additive zur Herstellung von Polyurethan-Etherschäumen.

Weitere Gegenstände der Erfindung sind durch die Ansprüche gekennzeichnet.

Die Siloxanblöcke (A) der Blockcopolymeren sind gemäß einer bevorzugten Ausführungsform der Erfindung lineare Siloxanpolymere oder Ketten mit sich wiederholenden Siloxaneinheiten, die durch die Formel (-R₂SiO-), wobei R = Methyl- ist, dargestellt werden können.

Der Polyoxyalkylenblock (B) der linearen Blockcopolymeren ist gemäß einer bevorzugten Ausführungsform der Erfindung ein Oxyalkylenpolymer enthaltend die sich wiederholenden Oxyalkyleneinheiten, hier insbesondere die Oxyethylen- und Propenyloxyeinheiten.

Das gewichtsmittlere Molekulargewicht jedes Siloxanblocks (A) liegt gemäß einer bevorzugten Ausführungsform zwischen 650 bis 6500 g/mol, vorzugsweise 800 bis 1500 g/mol, besonders bevorzugt bei 1000 bis 1200 g/mol.

Das gewichtsmittlere Molekulargewicht jedes Polyoxyalkylenblocks der erfindungsgemäß hergestellten Mischpolymeren liegt gemäß einer bevorzugten Ausführungsform zwischen 600 und 10.000 g/mol, vorzugsweise 1.000 bis 5.000 g/mol.

Die Größe der einzelnen Oxyalkyleneinheiten oder Siloxanblöcke ist nicht notwendigerweise einheitlich, sondern kann innerhalb der angegebenen Grenzen beliebig variieren.

Die einzelnen Polyoxyalkyleneinheiten sind gemäß einer bevorzugten Ausführungsform der Erfindung Additionsprodukte aus mindestens einem Oxyalkylenmonomer, ausgesucht aus der Gruppe Ethylenoxid, Propylenoxid, Butylenoxid Tetrahydrofuran, vorzugsweise Mischprodukte aus mindestens zwei Monomereinheiten, insbesondere aus Ethylenoxid und Propylenoxid.

Die Polyoxyalkylenblöcke bestehen gemäß einer bevorzugten Ausführungsform im Wesentlichen aus Oxyethyleneinheiten oder Oxypropyleneinheiten, bevorzugt sind gemischte Oxyethylen- und Oxypropyleneinheiten mit einem Oxyethylenanteil von etwa 30 bis 70 Gewichtsprozent und 70 bis 30 Gewichtsprozent Oxypropylenanteil bezogen auf den Gesamtgehalt an Oxyalkyleneinheiten im Block.

Gemäß einer bevorzugten Ausführungsform beträgt der gesamte Siloxanblockanteil (A) im Copolymer zwischen 20 und 50 Gewichtsprozent, vorzugsweise 25 bis 40 Gew.-%, und der Anteil der Polyoxyalkylenblöcke zwischen 80 und 50 Gew.-%. Das Blockcopolymer weist gemäß einer bevorzugten Ausführungsform ein mittleres gewichtsgemitteltes Molekulargewicht Mw von mindestens 10.000 g/mol bis ca. 160.000 g/mol, vorzugsweise 15.000 g/mol bis ca. 100.000 g/mol, insbesondere 20.000 g/mol bis ca. 36.000 g/mol auf. Die Ermittlung der mittleren Molekulargewichte basiert dabei auf den bekannten Methoden der GPC-Analytik.

Das molare Verhältnis von a,ω-Diacetoxysiloxanen zu Polyetherdiolen liegt gemäß einer bevorzugten Ausführungsform im Bereich von 0,90 bis 1,10 ,bevorzugt im Bereich 0,95 bis 1,05 besonders bevorzugt im Bereich 0,99 bis 1,01. Für den Fachmann erschließt sich ohne Weiteres, dass sich der erzielbare Polymerisationsgrad an das Erreichen einer nahezu perfekten Stöchiometrie der Reaktanden knüpft.

Das erfindungsgemäße Verfahren wird gemäß einer bevorzugten Ausführungsform ausgeführt durch Umsetzung von endäquilibrierten, Acetoxy-Si-Einheiten enthaltenden Polyorganosiloxanen der allgemeinen Formel (II) 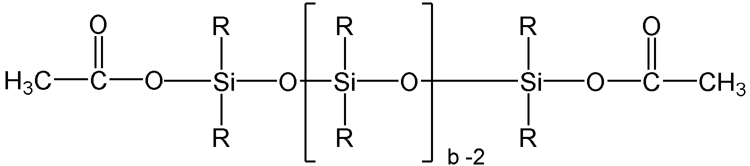 worin bedeuten:
R : Methylreste,
b : 8 bis 80, vorzugsweise 10 bis 50, besonders bevorzugt 10 bis 25, mit wenigstens einem Alkohol, der ausgewählt ist aus der Gruppe der Polyetherdiole mit der allgemeinen Formel (III)

   HO- (CₙH₍₂ₙ₋ₘ₎R ¹ₘO-)ₓ-H (III)
enthalten, worin
R¹ : Methyl
n : 2 bis 4,
m : 0 oder 1,
x : einen Wert von 1 bis 200, vorzugsweise 10 bis 100, insbesondere 35 bis 60, hat, wobei die Oxyalkylensegmente - (CₙH₍₂ₙ₋ₘ₎R¹ₘO-) innerhalb eines Oxyalkylenetherrestes untereinander verschieden sein können, sowie die Reihenfolge der einzelnen Segmente
-(CₙH₍₂ₙ₋ₘ₎R¹ₘO-) beliebig sein kann und insbesondere Blockcopolymere, statistische Polymere sowie deren Kombinationen umfasst. Erfindungsgemäß bevorzugt sind Polyetherdiole, in denen Ethylenoxid (EO) und Propylenoxyd (PO) als Copolymerisate vorliegen. Besonders bevorzugt sind EO/PO-Copolymerisate, die blockartigen Aufbau besitzen und einen EO-Anteil von ca. 30 bis 70 Gew.-%, bezogen auf den Gesamtgehalt an Oxyalkyleneinheiten, enthalten.

Zur Sicherstellung erhöhter Lagerstabilität können die nach dem erfindungsgemäßen Verfahren hergestellten linearen SiOC-verknüpften Polyethersiloxane zudem noch mit kleinen Mengen organischer Amine, wie zum Beispiel N-Methylmorpholin, Triisopropanolamin oder Triethanolamin versetzt werden. Dies entspricht einer bevorzugten Ausführungsform der Erfindung.

Eine besonders empfindliche und aussagekräftige Bewertung der erfindungsgemäßen Verbindungen ermöglicht der anwendungstechnische Test, bei dem das gewonnene Copolymer als Schaumstabilisator in Polyurethanformulierungen zur Herstellung von insbesondere Etherschäumen oder offenzelligen Hartschäumen eingebracht wird. Strukturelle Defizite im Schaumstabilisator geben sich bei der Verschäumung in technisch unzureichendem Verhalten, also beispielsweise Schrumpf bzw. Kollaps, zu erkennen.

Die Herstellung der nach dem erfindungsgemäßen Verfahren beanspruchten SiOC-verknüpften, linearen Polydimethylsiloxan-Polyoxyalkylen-Blockcopolymeren kann wahlweise mit oder ohne den Einsatz eines geeigneten Lösungsmittels erfolgen. Werden hochmolekulare und damit einhergehend hochviskose SiOC-verknüpfte Copolymere angestrebt, so kann deren Herstellung im Sinne ihrer guten Handhabbarkeit während und nach der Synthese zweckmäßigerweise durch die Umsetzung des jeweiligen Polyetherdiols mit dem jeweiligen α,ω-Acetoxysiloxan in einem geeigneten Lösungsmittel stattfinden. Geeignete Solventien sind Alkane, Cycloalkane, Alkylaromaten, endverschlossene Polyether aber auch Emollientester wie Myristylmyristat u.ä., wobei insbesondere hochsiedende Lösungsmittel mit Siedepunkten > 120°C bevorzugt sind.

Erfindungsgemäß wurde gefunden, dass man die zügige und vollständige Umsetzung von trifluormethansulfonsauren, äquilibrierten α,ω-Diacetoxypolydimethylsiloxanen mit Polyetherdiolen unter Vermeidung von Verfärbungen des Reaktionsproduktes in Gegenwart von Basen wie zum Beispiel Ammoniak durchführt. Der Einsatz von Ammoniak entspricht einer besonders bevorzugten Ausführungsform der Erfindung.

Die Menge der in das Reaktionssystem eingetragenen festen, flüssigen oder gasförmigen Base wird erfindungsgemäß dabei vorzugsweise so bemessen, dass sie sowohl für die Neutralisation der im System vorhandenen Trifluormethansulfonsäure, als auch der Salzfällung der am Siloxan gebundenen Acetatgruppen sowie der Fällung des noch im Reaktionssystem vorhandenen Acetanhydrids sowie gegebenenfalls freier Essigsäure dient. Die Reaktion wird gemäß einer bevorzugten Ausführungsform der Erfindung bei Temperaturen zwischen vorzugsweise 20 und 70°C über die Dauer von vorzugsweise 1 bis 3 Stunden durchgeführt.

Eine andere erfindungsgemäß bevorzugte Ausführungsform sieht vor, in dem zur Verknüpfung vorgesehenen Polyetherol respektive Polyetherolgemisch bereits unter Rühren Base(n) vorzulegen, bevor man das trifluormethansulfonsaure, äquilibrierte α,ω-Diacetoxy-polydimethylsiloxan hinzufügt.

Diese Reaktion wird gemäß einer bevorzugten Ausführungsform der Erfindung vorzugsweise bei Temperaturen zwischen 50 bis 90°C und vorzugsweise über die Dauer von 2 bis 6 Stunden durchgeführt.

Bevorzugte erfindungsgemäß einzusetzende einfache Basen sind zum Beispiel Alkali- bzw. Erdalkali-Carbonate und/ oder -Hydrogencarbonate und/ oder gasförmiger Ammoniak und/ oder Amine. Der bekannten Kondensationsneigung von Acetoxysiloxanen Rechnung tragend, sind dabei ganz besonders bevorzugt solche Basen, die auf Grund ihrer chemischen Zusammensetzung kein Wasser in das Reaktionssystem eintragen. Somit haben wasserfreie Carbonate vor Hydrogencarbonaten und Hydratwasser-freie vor Hydratwasser-enthaltenden Basen jeweils den Vorzug.

Überraschenderweise wurde darüber hinaus gefunden, dass die erfindungsgemäß hergestellten Polyethersiloxane eine vorzügliche Lagerstabilität besitzen. Als Kriterium zur Bewertung der Lagerstabilität der im Rahmen der erfinderischen Lehre hergestellten SiOC-verknüpften Polyethersiloxane wird bei konstant gewählter Lagertemperatur durch Probenahme die Viskosität als Funktion der Zeit verfolgt, da sich hierin mögliche Abbau- und/ oder Aufbauprozesse empfindlich manifestieren.

Die Reaktionstemperatur zur Herstellung der erfindungsgemäßen Copolymeren sollte gemäß einer bevorzugten Ausführungsform bei 20°C bis 120°C, bevorzugt bei 20°C bis 70°C, liegen.

### Beispiele

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die Gaschromatogramme werden an einem GC-Gerät des Typs GC 7890B der Fa. Agilent Technologies
ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D4-, D5-, D6-Gehalte bezogen auf die Siloxanmatrix und festgestellt nach der Derivatisierung der α,ω-Diacetoxypolydimethylsiloxane zu den entsprechenden α,ω-Diisopropoxy-polydimethylsiloxanen herangezogen. Die Derivatisierung zu den α,ω-Diisopropoxy-polydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die eingesetzten Polyetherdiole besitzen Wassergehalte von ca. 0,2 Massen-% und werden ohne weitere Vortrocknung verwendet. Eingesetztes Toluol respektive Alkylbenzol (C₁₀-C₁₃) besitzen einen Wassergehalt von 0,03 Massen-% und werden ebenfalls ohne Vortrocknung verwendet.

Die OH-Zahl der Polyetherdiole wird gemäß DGF C-V 17 a (53), beziehungsweise gemäss Ph. Eur. 2.5.3 Method A bestimmt, wobei man zunächst die Hydroxylgruppen der zu analysierenden Probe mit Essigsäureanhydrid in Gegenwart von Pyridin acetyliert und dann im Rahmen einer Differenztitration (Blindprobe, Berücksichtigung des Acetanhydridüberschusses) die freigesetzte Essigsäure als Verbrauch KOH in mg pro Gramm Polyetherdiol titriert.

### Beispiel 1

### Herstellung eines endäquilibrierten, Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 24,3 g Essigsäure (3,0 Gewichtsprozent bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 4 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,09 % | 2,62 % | 0,86 % | 7,57 % | 4,60 % |

### Beispiel 2 (erfindungsgemäß)

In einem 250-ml Vierhalskolben, versehen mit KPG-Rührer, Kontaktthermometer und Rückflusskühler sowie einem Gaseinleitungsrohr werden 0,02 mol (36,2 g) des in Beispiel 1 hergestellten, linearen, trifluormethansulfonsauren α,ω-Acetoxysiloxans N=14 zusammen mit 0,02 mol (56,1 g) eines Polyetherdiols (Ethylenoxid-Propylenoxyd-Copolymerisat mit einer nach OH-Zahl bestimmten Molmasse von ca. 2805 g/ mol und ca. 50 Gewichtsprozent Propylenoxid-Anteil) und 92,3 g Toluol unter Rühren vorgelegt.

In diese homogen-klare Mischung wird bei Raumtemperatur unter weiterem Rühren für 45 Minuten ein mäßiger Strom trockenen Ammoniakgases eingeleitet. Ohne weitere Ammoniak-Beaufschlagung wird die bereits zu diesem Zeitpunkt deutlich viskosere Reaktionsmischung nun für 3 Stunden auf 70°C erhitzt.

Man lässt den Ansatz auf ca. 23°C abkühlen und befreit das in Toluol gelöste, viskose Copolymer mit Hilfe einer Filterpresse von den darin befindlichen Salzen. Isoliert wird ein farblos, klares Filtrat. Bei reduziertem Druck (0,1 mbar) wird Toluol an einem Rotationsverdampfer abdestilliert.

Das zugehörige GPC zeigt ein Mw = 108977 g/ mol und ein Mn = 44726 g/mol.

## Patentansprüche

1. Verfahren zur Herstellung von SiOC-verknüpften, linearen Polydimethylsiloxan-Polyoxyalkylen-Blockcopolymeren mit sich wiederholenden (AB)-Einheiten durch Umsetzung von Polyetherdiolen mit trifluormethansulfonsauren, endäquilibrierten α,ω-Diacetoxypolydimethylsiloxanen, **dadurch gekennzeichnet, dass** man die Umsetzung durch Hinzufügen einer festen, flüssigen oder gasförmigen Base vornimmt gegebenenfalls unter Einsatz inerter Lösungsmittel.

2. Verfahren gemäß Anspruch 1, **dadurch gekennzeichnet, dass** das molare Verhältnis von trifluormethansulfonsauren, endäquilibrierten α,ω-Diacetoxy-polydimethylsiloxanen zu Polyetherdiolen im Bereich von 0,90 bis 1,10, bevorzugt im Bereich 0,95 bis 1,05, ganz besonders bevorzugt im Bereich 0,99 bis 1,01 liegt.

3. Verfahren gemäß Anspruch 1 oder 2, **dadurch gekennzeichnet, dass** die Reaktion bei Temperaturen von 20°C bis 120°C, bevorzugt bei Temperaturen von 20°C bis 70°C durchgeführt wird.

4. Verfahren gemäß einem der Ansprüche 1 bis 3, **dadurch gekennzeichnet, dass** die einzusetzenden Basen ausgewählt sind aus den Alkali- und/ oder Erdalkali-Carbonaten und/ oder -Hydrogencarbonaten und/oder Aminen, ganz besonders bevorzugt gasförmiger Ammoniak.

5. Verfahren gemäß einem der Ansprüche 1 bis 4, **dadurch gekennzeichnet, dass** als inerte Lösungsmittel Alkane, Cycloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol oder Glyzerin, vorzugsweise Myristylmyristat, verwendet werden.

6. Verfahren gemäß einem der Ansprüche 1 bis 5, **dadurch gekennzeichnet, dass** das gewichtsmittlere Molekulargewicht jedes Siloxanblocks(A), (-(CH₃)₂SiO-)_{b}, zwischen 600 bis 6100 g/mol liegt, bestimmbar mit Hilfe der ²⁹Si-NMR-Spektroskopie.

7. Verfahren gemäß einem der Ansprüche 1 bis 6, **dadurch gekennzeichnet, dass** der Polyoxyalkylenblock(B), (-CₙH₍₂ₙ₋₁₎R¹ₘO-)_{c}, worin R¹ : Methyl- darstellt, gemischte Oxyethylen- und Oxypropyleneinheiten mit einem Oxyethylenanteil von 30 bis 70 Gewichtsprozent und 70 bis 30 Gewichtsprozent Oxypropylenanteil, bezogen auf den Gesamtgehalt an Oxyalkyleneinheiten im Block, enthält.

8. Verfahren gemäß einem der Ansprüche 1 bis 7, **dadurch gekennzeichnet, dass** das gewichtsmittlere Molekulargewicht jedes Polyoxyalkylenblocks (B), (CₙH₍₂ₙ₋₁₎R¹ₘO)_{c}, worin R¹ : Methyldarstellt, zwischen 600 und 10.000 g/mol liegt, bestimmbar über die OH-Zahl des eingesetzten Polyetherdiols.

9. Verfahren gemäß einem der Ansprüche 1 bis 8, **dadurch gekennzeichnet, dass** der Anteil der Siloxanblöcke A im Gesamt-Copolymer zwischen 20 und 50, vorzugsweise zwischen 25 und 40 Gewichtsprozent beträgt.

10. Verfahren gemäß einem der Ansprüche 1 bis 9, **dadurch gekennzeichnet, dass** das Polydimethylsiloxan-Polyoxyalkylen-Blockcopolymer ein gewichtsmittleres Molekulargewicht von 10.000 g/mol bis 200.000 g/mol, vorzugsweise 25.000 g/mol bis 180.000 g/mol, insbesondere 40.000 g/mol bis 140.000 g/mol aufweist, bestimmbar über GPC-Analytik.

## Claims

1. Process for producing SiOC-bonded, linear polydimethylsiloxane-polyoxyalkylene block copolymers comprising repeating (AB) units by reaction of polyether diols with trifluoromethanesulfonic acid-acidified, end-equilibrated α,ω-diacetoxypolydimethylsiloxanes, **characterized in that** the reaction is undertaken by adding a solid, liquid or gaseous base, optionally using inert solvents.

2. Process according to Claim 1, **characterized in that** the molar ratio of trifluoromethanesulfonic acid-acidified, end-equilibrated α,ω-diacetoxypolydimethylsiloxanes to polyether diols is in the range from 0.90 to 1.10, preferably in the range 0.95 to 1.05, very particularly preferably in the range 0.99 to 1.01.

3. Process according to Claim 1 or 2, **characterized in that** the reaction is performed at temperatures of 20°C to 120°C, preferably at temperatures of 20°C to 70°C.

4. Process according to any of Claims 1 to 3, **characterized in that** the bases to be employed are selected from alkali metal and/or alkaline earth metal carbonates and/or hydrogencarbonates and/or amines, very particularly preferably gaseous ammonia.

5. Process according to any of Claims 1 to 4, **characterized in that** inert solvents employed are alkanes, cycloalkanes, alkylaromatics, end-capped polyethers and/or emollient esters, such as the esters derived from lauric acid, myristic acid, palmitic acid, stearic acid, oleic acid, isostearic acid, ricinoleic acid and behenic acid combined with cetyl, stearyl, isostearyl, oleyl, octyldodecyl, myristyl and behenyl alcohol or glycerol, preferably myristyl myristate.

6. Process according to any of Claims 1 to 5, **characterized in that** the weight-average molecular weight of each siloxane block (A), (-(CH₃)₂SiO-)_{b}, is between 600 to 6100 g/mol determinable by ²⁹Si-NMR spectroscopy.

7. Process according to any of Claims 1 to 6, **characterized in that** the polyoxyalkylene block (B), (-CₙH₍₂ₙ₋₁₎R¹ₘO-)_{c}, wherein R¹ represents methyl, contains mixed oxyethylene and oxypropylene units having an oxyethylene proportion of 30 to 70 percent by weight and an oxypropylene proportion of 70 to 30 percent by weight based on the total content of oxyalkylene units in the block.

8. Process according to any of Claims 1 to 7, **characterized in that** the weight-average molecular weight of each polyoxyalkylene block (B), (CₙH₍₂ₙ₋₁₎R¹ₘO)_{c}, wherein R¹ represents methyl, is between 600 and 10 000 g/mol, determinable via the OH number of the employed polyether diol.

9. Process according to any of Claims 1 to 8, **characterized in that** the proportion of the siloxane blocks A in the total copolymer is between 20 and 50, preferably between 25 and 40, percent by weight.

10. Process according to any of Claims 1 to 9, **characterized in that** the polydimethylsiloxane-polyoxyalkylene block copolymer has a weight-average molecular weight of 10 000 g/mol to 200 000 g/mol, preferably 25 000 g/mol to 180 000 g/mol, especially 40 000 g/mol to 140 000 g/mol, determinable by GPC analysis.

## Revendications

1. Procédé pour la préparation de copolymères séquencés de polydiméthylsiloxane-polyoxyalkylène linéaires liés par SiOC comportant des motifs répétitifs (AB) par transformation de polyétherdiols avec α,ω-diacétoxypolydiméthylsiloxanes acides trifluorométhanesulfoniques, complètement équilibrés, **caractérisé en ce que** la transformation est effectuée par ajout d'une base solide, liquide ou gazeuse, éventuellement avec utilisation de solvants inertes.

2. Procédé selon la revendication 1, **caractérisé en ce que** le rapport molaire des α,ω-diacétoxypolydiméthylsiloxanes acides trifluorométhanesulfoniques, complètement équilibrés sur les polyétherdiols se situe dans la plage de 0,90 à 1,10, de préférence dans la plage de 0,95 à 1,05, de manière tout particulièrement préférée dans la plage de 0,99 à 1,01.

3. Procédé selon la revendication 1 ou 2, **caractérisé en ce que** la réaction est conduite à des températures de 20 °C à 120 °C, de préférence à des températures de 20 °C à 70 °C.

4. Procédé selon l'une quelconque des revendications 1 à 3, **caractérisé en ce que** les bases à utiliser sont choisies parmi les carbonates et/ou hydrogénocarbonates de métaux alcalins et/ou alcalino-terreux et/ou les amines, de manière particulièrement préférée l'ammoniac gazeux.

5. Procédé selon l'une quelconque des revendications 1 à 4, **caractérisé en ce qu'**on utilise, comme solvants inertes, des alcanes, des cycloalcanes, des alkylaromatiques, des polyéthers à terminaisons fermées et/ou des esters émollients, tels que les esters dérivés de l'acide laurique, myristique, palmitique, stéarique, oléique, isostéarique, ricinoléique et béhénylique, combinés avec l'alcool cétylique, stéarylique, isostéarylique, oléylique, octyldodécylique, myristylique et béhénylique ou le glycérol, de préférence le myristate de myristyle.

6. Procédé selon l'une quelconque des revendications 1 à 5, **caractérisé en ce que** la masse moléculaire moyenne en poids de chaque bloc siloxane (A), (-(CH₃)₂SiO-)_{b}, se situe entre 600 à 6 100 g/mol, déterminable au moyen de la spectroscopie RMN ²⁹Si.

7. Procédé selon l'une quelconque des revendications 1 à 6, **caractérisé en ce que** le bloc polyoxyalkylène (B), (-CₙH₍₂ₙ₋₁₎R¹ₘO-)_{c}, dans lequel R¹ : représente méthyle, contient des motifs mixtes d'oxyéthylène et d'oxypropylène présentant une proportion d'oxyéthylène de 30 à 70 % en poids et 70 à 30 % en poids de proportion d'oxypropylène, par rapport à la teneur totale en motifs d'oxyalkylène dans le bloc.

8. Procédé selon l'une quelconque des revendications 1 à 7, **caractérisé en ce que** la masse moléculaire moyenne en poids de chaque bloc polyoxyalkylène (B), (CₙH₍₂ₙ₋₁₎R¹ₘO)_{c}, dans lequel R¹ : représente méthyle, se situe entre 600 et 10 000 g/mol, déterminable par l'indice d'OH du polyéther diol utilisé.

9. Procédé selon l'une quelconque des revendications 1 à 8, **caractérisé en ce que** la proportion de blocs siloxane A dans le copolymère total représente entre 20 et 50, de préférence entre 25 et 40 % en poids.

10. Procédé selon l'une quelconque des revendications 1 à 9, **caractérisé en ce que** le copolymère séquencé de polydiméthylsiloxane-polyoxyalkylène présente une masse moléculaire moyenne en poids de 10 000 g/mol à 200 000 g/mol, de préférence de 25 000 g/mol à 180 000 g/mol, en particulier de 40 000 g/mol à 140 000 g/mol, déterminable par analyse GPC.
